# EUROPEAN PATENT APPLICATION

(11) **EP 1 241 852 A1**
(43) Date of publication of application: **18.09.2002**
(21) Application number: 01304083.7
(22) Date of filing: 04.05.2001
(51) Int. Cl.: H04L 29/06, H04M 3/42, H04M 7/00, H04L 29/12, H04Q 3/00

(54) **Computer network based communication system and method**

(30) Priority: 13.03.2001 KR 2001012933
(71) Applicant: Phone Telecom Inc., Gangnam-Gu, Seoul 135-180 (KR)
(72) Inventor: Park, Jae Chul, Kangseo-gu, Seoul (KR)
(74) Representative: Allman, Peter John

(57) **Abstract**

The present invention relates to computer network based communication system and method in which voice/data composite communication can be made regardless of communication means, location, time, and kinds of communication appliances by using a unique and lifelong individual identification number. To this end, the present invention provides a communication system comprising a web server for managing communication information including a network identification number and a user identification number which is assigned to the user and then registered, a gateway for setting communication channels between a public network connected with telephones and an internet network connected with terminals, and a gatekeeper for authenticating a communication service required by the terminals and dynamically matching the identification number for communication with an IP address, whereby voice/data communication can be made between the telephones and the terminals.

## Description

### CROSS REFERENCE TO RELATED ART

This application claims the benefit of Korean Patent Application No. 2001-12993, filed on March 13, 2001, which is hereby incorporated by reference.

### BACKGROUND OF THE INVENTION

### Field of the Invention

The present invention relates to computer network based communication system and method, and more particularly, to communication system and method in which various kinds of communication can be made between telephones and all kinds of terminals capable of computer communication by combining computer networks and public switched telephone networks.

### Discussion of the Related Art

In conventional communication, a sender and a receiver have communicated with each other via a public switched telephone network or a mobile network (hereinafter, referred to as "public network"). That is, the sender calls the receiver to whom the sender wants to make a phone call via wire telephones or mobile telephones (hereinafter, referred to as "telephones"), and then they communicate with each other by the public network.

Owing to rapid developments of communication and computer technologies, it has been possible to perform voice communication via an internet network. The internet communication is made by converting a voice signal of the sender or receiver into a data format suitable to a computer network, transmitting the converted signal via the computer network, and again converting the converted communication signal into a voice signal.

Such a conventional computer network based communication system and method will be explained below.

A computer having hardware and software for the internet communication (hereinafter, referred to as "a soft phone") is connected with the internet network, and a service server of an internet communication provider is also connected with the internet network. That is, a user who intends to utilize the internet communication connects with the service server, submits the personal information, IP address information, etc. for user registration, and then is assigned an identification number, a password, etc. for the internet communication.

In order to perform the internet communication, the sender should connect with the service server using a soft phone, i.e., software that enables the communication via the web, and provide the service server with an identification number of the receiver after completion of the user authentication. The service server calls the receiver, and then, the sender and the receiver communicate with each other.

On the other hand, the service server connected with the internet network is also connected with the public network via a gatekeeper and a gateway so that communication can be made between the soft phones themselves as well as between the soft phone and the telephone.

The communication from the soft phone to the telephone is similar to that between the soft phones themselves mentioned above. However, the voice signal of the sender, i.e., the soft phone is converted into data for the internet communication which is, in turn, converted into data suitable to the public network, and is transmitted to the public network. On the part of the receiver, the transmitted signal is converted into the voice signal through the reverse procedures to the aforementioned ones.

However, there were the following problems in the conventional public network or computer network based communication system and method mentioned above.

First, the identification number is a number that is assigned to a line or communication appliance, i.e., the telephone. That is, since the current identification number for communication is a number assigned to the communication means rather than a number for the user, there are some troubles in that the identification number will be simultaneously changed or the user should have a work for altering the number when the user changes the above communication means for the other ones.

Second, generally and recently, various communication means are simultaneously used. That is, an internet communication, an electronic mail, etc. using the internet are generally used together with the public network. However, since individual identification numbers that are not relevant to each other are respectively used in the individual communication, the numbers should be separately kept in mind. Thus, there is a problem in that the conventional identification number for communication is not a true individual communication number.

Third, Korean Patent Application No. 2000-56099 has recently proposed a method for communicating from the telephone to a terminal via a public network and an internet network. However, it is still inconvenient since the user first inputs a service call number assigned to the service system, that is, calls the service server, and then inputs an identification number of the receiver.

### SUMMARY OF THE INVENTION

The present invention is contemplated to solve the problems mentioned above. It is an object of the present invention to provide computer network based communication system and method in which voice/data composite communication can be made regardless of communication means, location, time, and kinds of communication equipments by using a unique individual lifelong identification number.

It is another object of the present invention to provide computer network based communication system and method in which the communication from a telephone to a terminal or between the telephones themselves via an internet network can be conveniently made.

In order to achieve the above objects, the present invention provides a communication system comprising a web server for managing communication information including a network identification number and a user identification number which is assigned and registered, a gateway for setting communication channels between a public network connected with telephones and an internet network connected with terminals, and a gatekeeper for authenticating a communication service required by the terminals and dynamically matching the identification number for communication with an IP address, and whereby voice/data communication can be made between the telephone and the terminal.

Herein, the user identification number is a unique identification number that corresponds to the user one by one and does not overlap with each other. It is preferred that some prefix figures of the user identification number be not assigned to the user and then reserved.

Therefore, a call is opened via the internet network if a receiver's number transmitted upon request of the call corresponds to the user identification number previously registered, and a call is opened via the public network if the identification number is not the registered number.

In addition, it is preferred that predetermined international telephone calling identity is further included in the receiver's number transmitted upon request of the call. If the international telephone calling identity is included in the transmitted number, the call is opened to the international telephone.

According to another aspect of the present invention, a communication method comprising the steps of registering a user identification number which is assigned to a user but does not overlap therewith, authenticating a registered user when a communication service is requested together with the user identification number, and opening automatically a call between various communication networks, which are different from one another, depending upon the user identification number, is provided. Further, it is preferred that the authentication step comprise a step of dynamically matching the user identification number with an IP address.

Therefore, a call is opened via an internet network if a number of a receiver transmitted upon request of the call corresponds to the user identification number previously registered, and a call is opened via a public network if the number is not the registered number.

Further, it is preferred that a call be opened via an international telephone network if the call is requested under a condition that an international telephone calling identity is included.

Therefore, according to the present invention, voice/data composite communication can be made regardless of location, time, and kinds of communication equipments by using only a single identification number for communication.

### BRIEF DESCRIPTION OF THE DRAWINGS

The accompanying drawings, which are included to provide a further understanding of the invention and are incorporated in and constitute a part of this specification, illustrate embodiments of the invention and, together with the description, serve to explain the principles of the invention.
Figure 1 is a schematic constitutional view showing computer network based system and method according to the present invention;
Figure 2 is a flow chart showing a user registration procedure of the communication system according to the present invention;
Figure 3 is a flow chart showing a user authentication procedure of the communication system according to the present invention;
Figure 4 is a flow chart showing a communication procedure from a terminal to a telephone or another terminal using the communication system according to the present invention;
Figure 5 is a flow chart showing a communication procedure from a telephone to a terminal or another telephone using the communication system according to the present invention; and
Figure 6 is a flow chart showing procedures of transmitting and receiving an electronic mail of the communication system according to the present invention.

### DETAILED DESCRIPTION OF THE PREFERRED EMBODIMENTS

Hereinafter, computer network based communication system and method according to the present invention will be explained in detail with reference to the accompanying drawings.

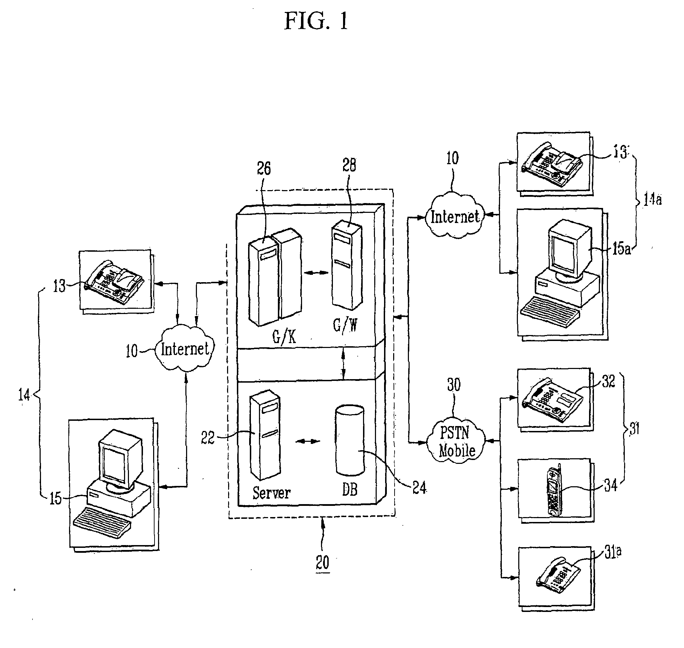

Referring to Figure 1, the constitution of the computer network based communication system according to the invention is now described.

In the present invention, a conventional communication terminal 14 and a service system 20 for providing a communication service according to the present invention are connected with an internet network 10. The service system 20 is also connected with a public network 30. Needless to say, a telephone 31, such as a wire telephone 32 or a mobile telephone 34 using the public network 30 is connected with the public network 30.

Herein, the telephone 31 means a device including a digital/analog wire telephone, a mobile telephone such as cellular phone, a personal communication system (PCS) phone, a facsimile machine, etc. The public network 30 means a network for providing a communication channel between the telephones 31. The internet network 10 generally means a computer based communication network.

Further, the terminal 14 means all kinds of equipments that are capable of the internet communication. Therefore, the terminal 14 is understood to be a concept that it includes a personal computer (hereinafter, referred to as "a soft phone") having a program for enabling the communication through a web and connected with the internet via a modem or a private line, a telephone (hereinafter, referred to as "an internet phone") developed for exclusive use of the internet communication and having hardware and software necessary for the internet communication, a personal digital assistant (PDA), etc. Furthermore, a digital electric home appliance such as a television, etc. may be included in the terminal 14 if the appliance can be assigned an IP address and used for the internet communication.

In addition, the internet phone 13 is understood to be a concept that it includes internet phone (hereinafter, referred to as "@phone") having a movable type described in a patent application (Korean Patent Application No. 10-2000-0005118) previously filed as well as a fixed type connected with the internet network 10 via the modem or the private line.

On the other hand, the service system 20 is a system for providing and managing the communication service according to the present invention, and is constructed to include a subscriber management and system operation web server 22, a subscriber information management database 24, a gateway 28, a gatekeeper 26, etc. The service system 20 can be installed in great numbers by each regional group.

And, the gateway 28 has a function of a relay server for setting the communication channel between the public network 30 and the internet network 10 by enabling the communication format used in the public network 30 and the communication format used in the internet network 10 to be converted from each other. The gatekeeper 26 is used for setting a call channel between the terminal 14 and the telephone 31. It is preferred that the gatekeeper 26 also function as an authentication server for confirming whether a person requesting the communication service is a subscriber, etc. Further, the gatekeeper 26 can match the communication identification number (hereinafter, referred to as "@number") used for the present invention with IP addresses of a xxx.xxx.xxx.xxx (Ipv4) series and a future Ipv6 series, and can always provide the communication service with the user, regardless of the location where the user resides. (The details thereof will be described later.)

The gateway 28 and the gatekeeper 26 are also used for setting additional telephone services such as a speech quality including sound quality and volume over the telephone that are directly relevant to the telephone service, caller-id, call forwarding, etc.

In the present invention, the communication identification number provided from the service system 20 according to the present invention is used, and the internet network 10 and the public network 30 as communication networks are interconnected with each other. Thus, the voice/data communication between terminal 14 to terminal 14, terminal 14 to telephone 31, telephone 31 to terminal 14, and telephone 31 to telephone 31 can be made. (Hereinafter, the communication service provided from the present invention is referred to as "@communication.")

First, a subscription procedure is required by means of a web or the other methods since a user should have an individual @number in the @communication according to the present invention.

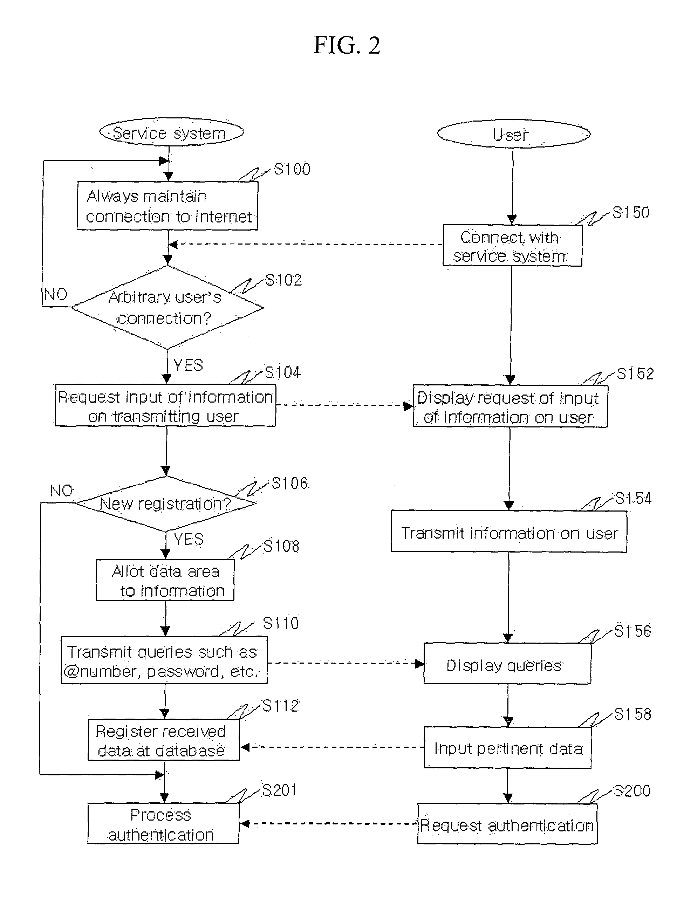

A subscriber registration procedure is explained with reference to Figures 1 and 2.

In order to manage a person who intends to use the communication service according to the present invention (hereinafter, referred to as "user"), the web server 22 confirms whether an arbitrary user is connected with the service, while the web server interlocks with the database 24 and is always maintained in a connection state with the internet network 10 (S100, S102).

At this time, if the arbitrary user is connected with the service system 20, i.e., the web server 22 (S150), the web server 22 sends the user a phrase for ascertaining whether the user requests a new member subscription, that is, whether the user requests an @number, the communication identification number (S102, S104). The received phrase is displayed on the screen of the user (S152), and then, the user sends the web server 22 information on whether the user requests a new registration or is a registered member (S154).

The web server 22 determines whether the information received from the user corresponds to a request for the new registration (S106). If it is determined to be the new registration request, the web server 22 allots the database 24 to a predetermined area on the basis of the information for registration transmitted from the user (S108) and transmits queries required for the new registration to the user (S110). The queries transmitted to the user are displayed on the screen of the user, and answers to the queries are transmitted to the web server 22 (S156, S158).

The web server 22 registers the user as a new subscriber based on the transmitted information (S112). And then, the registered user can receive various services provided by the service provider. That is, wherever the internet connection is possible, the user can make a phone call regardless of the locations by using a unique @number that is assigned to the user after the subscription procedure is completed.

Herein, the queries transmitted to the user include a user name, a resident registration number, a settlement method for service fees, an identification number for the communication, i.e., @number that the user wants to use, a password, etc. As described above, the @number is a unique number to be used when the user intends to make a use of services such as @communication, electronic mail, facsimile, voice messaging system, etc. which are provided by the service provider.

Hereinafter, the @number will be explained in detail.

The @number is an identification number used for the communication service according to the present invention and is assigned to not specific lines or communication appliances but an individual.

The user identification number (@number) is a unique number for identifying each user of the @communication and assigned to the subscriber by the service system 20, which is not overlapped with each other all over the world. The user may arbitrarily select the user identification number within a range predetermined in the service system 20, for example, the range of ten figures. However, a previously subscribed number cannot be selected repeatedly. Some numbers among the user identification numbers, for example, the numbers starting with "0", may be reserved for other purpose. That is, the reserved numbers are used to be distinguished from identification numbers of the other communication networks or area codes of wire telephony, etc.

On the other hand, when a sender uses a telephone in the @communication, the sender should firstly input an @communication identification number (network identification number). Here, the @communication identification number is generally a network identification number for distinguishing between telephone networks of telephone companies and is used as a prefix for distinguishing between a subscriber to a conventional telephone network and a subscriber to the @phone service when the user utilizes the conventional telephone 31 to communicate with the terminal 14. The @communication identification number is not optional to the user but is assigned to a company providing the @communication service according to the present invention by the government authorities of foreign countries in the world.

On the other hand, in the case where a receiver resides abroad and uses a telephone, a sender inputs an international telephone calling identity predetermined in the service system 20 before inputting the receiver's number. The receiver's number is the number including an international telephone country code, an area code (or a subscribed network identification number of the receiver in the case of mobile telephone) and the receiver's phone number.

As described above, since the @number is an identification number for communication assigned to not specific lines or communication means but an individual, the @number is a true individual lifelong communication number.

On the other hand, as for an existing user who is not determined as a new subscriber, the existing user is required to input the previously assigned @number and password, etc., and then, the user data previously registered is searched and compared with the inputted data via the procedures of the authentication request (S200) and authentication processing (S201). Thus, the user can use the service according to the present invention.

When a user has gone through the above-described subscribing formalities, the user can communicate with other persons by using the assigned @number at any location, where the internet connection can be made, regardless of a specific location.

On the other hand, according to the present invention, even though the terminal 14 for connecting with the service system 20 is changed, the user can communicate with other persons by using his @number, regardless of the IP address of the terminal 14. That is, according to the present invention, although a user corresponds to an @number one by one, the @number (or the user) matches not fixedly but dynamically with an IP address.

For realizing the above, before a user utilizes the service, the user goes through a terminal authentication procedure including the step of matching the @number with the IP address when the terminal 14 which can connect with the internet communication is firstly connected with the service.

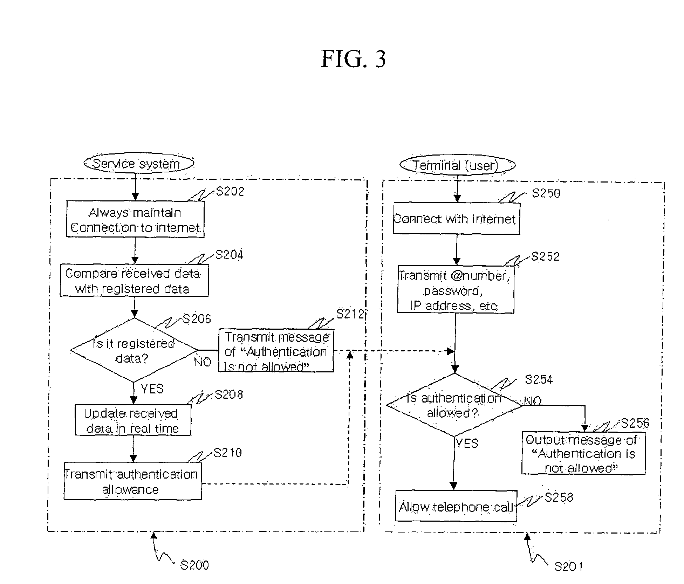

Hereinafter, the terminal connection authentication procedure will be described with reference to Figures 1 and 3.

The internet phone 13 is automatically connected with the internet by the network constitution initially set when the internet phone is installed, and the soft phone 15 is automatically connected with the internet by the network constitution previously set in the computer. As for the other terminals, since their internet settings have been already made, their connection with the internet can be directly made.

The user connected with the internet automatically transmits the @number, the password, and the IP address to the service system 20, for example, the gatekeeper 26 (S250, S252). Of course, the gatekeeper 26 is always connected with the internet and searches and compares the database 24, in which the user information is stored, with the @number, the password and the IP address received from the terminal 14 (S202, S204). The gatekeeper 26 authenticates the user if the received @number and password conforms to the previously registered @number and password in the database 24 (S206, S210).

Of course, as for an authenticated user, an IP address among the information transmitted from the terminal 14 of the user is updated in the database in real time (S208). Here, the updated IP address is effective until an authentication request is issued from the terminal 14 again.

When the authentication and the data update are completed in the gatekeeper 26, the @number and the IP address of the user are activated and the telephone call request transmitted from the terminal 14 to the gatekeeper 26 is allowed (S210).

If the connection with the internet is failed, the network is set again. Then, if the connection with the internet is successfully made, the above procedure proceeds. If the received data does not conform to the registered data as compared with each other, a message of "authentication is not allowed" is transmitted to the terminal 14 (S212).

In the terminal 14, it is possible to use the service if the authentication is allowed (S254, S258), and the message of "authentication is not allowed" is displayed thereon if the authentication is not allowed (S256).

Due to the above procedures, the user can answer the telephone and also make a phone call with the assigned number, regardless of the location of the user.

Hereinafter, the principle allowing the user to answer the telephone and make a phone call regardless of the physical location of the user will be explained.

The user corresponds fixedly to the @number one by one. However, although the IP address matches with the @number one by one, the one-to-one matching is not fixed but dynamically updated whenever the user attempts the connection with the gatekeeper 26. The reason is that it is necessary to match the @number with an actual location connected with the internet since the location of the terminal 14 where the user connects with the internet, that is, the IP address, may be changed even though the user corresponds to the @number one by one.

On the other hand, in the case where the user simultaneously utilizes several terminals 14, one @number may correspond to IP addresses of the several terminals 14 in the gatekeeper 26. In such a case where one @number corresponds to a plurality of IP addresses, the user can register the priority of the IP addresses at the database 24 through the option for selecting the telephone, which the user can firstly answer, upon subscribing the service. For example, in the case where the user simultaneously utilizes the internet phone 13 and the soft phone 15 and both of them have been authenticated in the gatekeeper 26, the telephone is connected with the terminal 14 which the user has set to be firstly connected.

Next, the @communication will be explained.

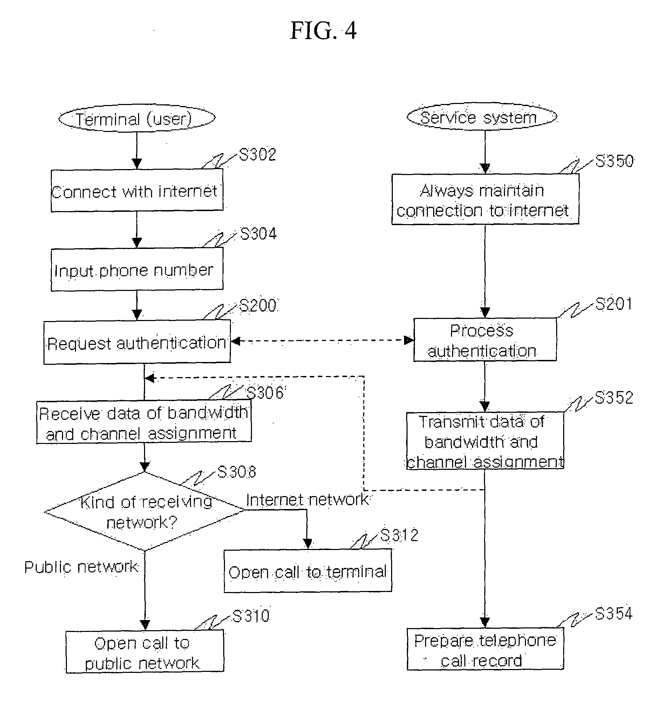

The method by which the terminal 14 communicates with the conventional telephone 31 or the other terminal 14a will be explained with reference to Figures 1 and 4.

The user (sender) connects with the service system 20, for example, the gateway 28 and then inputs the receiver's number (S302, S304).

Here, in the case where the receiver uses the terminal 14, the @number itself is the receiver's number. However, in the case where the receiver uses a telephone and domestic communications are used, the subscribed network identification number of the receiver (area code in the case of wire toll call) and receiver's phone number are sequentially inputted. If the international communications are used, the international telephone calling identity predetermined in the service system of the present invention, the international telephone country code, the area code (the subscribed network identification number of the receiver in the case of mobile telephone) and the receiver's phone number are sequentially inputted.

Then, the aforementioned authentication procedures (S200, S201) proceed. That is, the information on the sender including the @number, the password, the IP address, etc. and the information on the receiver including the receiver's phone number are transmitted. The service system 20 compares the @number, the password, and the IP address of the sender with the registered information on the sender, authenticates the user to utilize the service and transmits basic information required for the communication, for example, band width, assigned channel and the like to the terminal 14.

When the authentication has been successfully completed, the data of the bandwidth, the channel assignment and the like is transmitted to the terminal 14 (S352). The terminal 14 receives the transmitted data (S306). If the receiver uses the conventional telephone 31, the terminal 14 transmits the sender's phone number to equipments for connecting with the public network 30 via the authentication and the assigned bandwidth and opens a call to the public network 30 (S308, S310). At this time, when the terminal 14 opens the call, all contents are transferred via the gateway 28, and the gatekeeper 26 monitors the call duration of the terminal 14 and the like, detects the termination of the call to the public network 30 upon its termination and records the call duration of the user. Based on the record, the fee for a call is charged.

On the other hand, if the receiver uses the terminal 14, a call is opened via the internet network so that the sender communicates with the receiver (S308, S312). At this time, all contents in opening the call of the terminal 14 are also monitored by the gatekeeper 26 which, in turn, detects the termination of the call upon its termination and records the call duration of the user. The fee for a call is charged based on the record.

On the other hand, in the case where the sender and the receiver are subscribed to different internet phone service companies, respectively, one of them cannot call the other in a prior art. However, since the @number includes the @communication identification number, that is, the network identification number for distinguishing between the telephone networks of the phone service companies in accordance with the present invention, the sender and the receiver can communicate with each other even in the case where they are subscribed to different internet phone service companies. Of course, every internet phone service company should have its unique network identification number in this case, and the data should be properly converted if the internet phone service companies provide the services in different formats and standards.

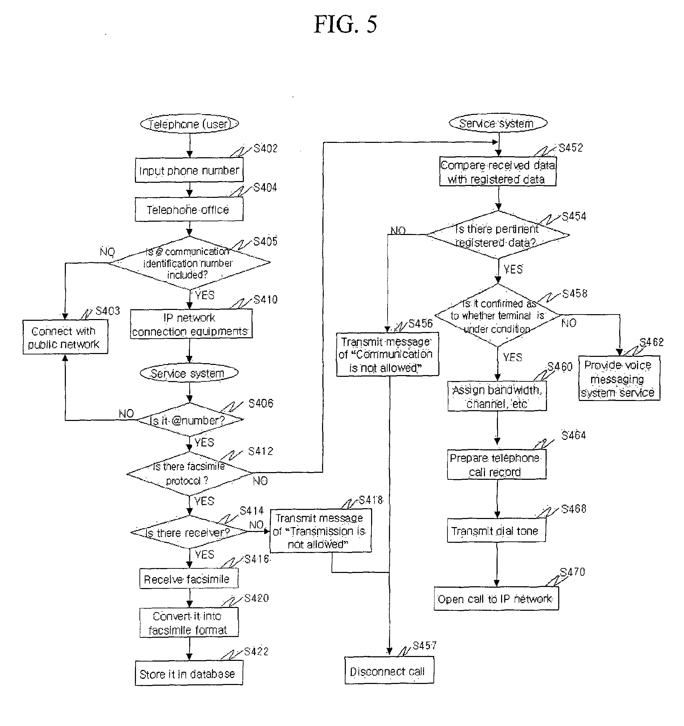

Next, the case where the conventional telephone 31 communicates with the terminal 14 or the other conventional telephone 31a will be explained with reference to Figures 1 and 5.

If the sender uses a conventional telephone 31, the predetermined @communication network identification number should be firstly inputted. The next numbers to be inputted are the same as the case where the sender uses the terminal 14. That is, the @number itself is inputted if the receiver uses the terminal 14; the subscribed network identification number of the receiver (area code in the case of wire toll call) and the receiver's phone number are inputted if the receiver is connected through the domestic communications; and the international telephone calling identity, the international telephone country code, the area code (the subscribed network identification number of the receiver in the case of mobile telephone) and the receiver's phone number are sequentially inputted if the receiver is connected through the international communications (S402).

Then, the inputted numbers are transmitted to a telephone office that, in turn, analyzes the inputted numbers (S404, S406). At this time, if the numbers transmitted to the telephone office include the @communication identification number, it is determined that the communication required by the sender is not the communication through the conventional public network 30 but the communication according to the present invention, so that the inputted numbers are transmitted to equipments for connecting the public network 30 and the internet network 10, for example, the gateway 28 (S406, S410).

The gateway 28 analyzes the received numbers and determines whether the numbers are the @number or the public network number. If the numbers includes the international telephone calling identity, or a specific number which is prohibited from being used as an individual identification number, it is determined that the numbers are the public network number, so that the call is opened through the corresponding local public network (PSTN or mobile communication network).

If the numbers are the @number, it is determined whether the communication data includes a facsimile protocol or not. If it is determined as a facsimile, a facsimile receiving procedure is performed (S412). The actual connection during the facsimile receiving procedure is made to the gatekeeper 26 that, in turn, searches the @number received from a facsimile machine therein. If the @number exists in the gatekeeper 26, the facsimile is received (S414, S416). However, if it is determined that the @number does not exist in the gatekeeper 26, a message of "facsimile transmission is not allowed" is sent to the facsimile machine and the communication call is disconnected (S418, S457).

In the meantime, the received data in the database 24 are converted in the form capable of being sent by facsimile mail (S420), and the converted facsimile contents are stored in the database 24 and then transmitted to an electronic mail account of a facsimile receiver (S422). Of course, in the case of facsimile, it is also possible to transmit it directly to the mail account of the receiver.

On the other hand, in the case where the request does not include the facsimile protocol, it is confirmed as to whether the received @number is a registered @number (S452).

If it is determined that the @number does not exist in the gatekeeper 26 or is a wrong number, a message of "communication is not allowed" is sent and it is impossible to make a phone call (S456, S457). However, in the case of registered @number, it is confirmed as to whether the terminal related with the @number corresponding to an appropriate IP address is under the condition of receipt (S454, S458). If the terminal is under the condition of receipt, the particulars required for the telephone call, such as a band width, etc. are assigned (S460). A telephone call record starts to be prepared (S464), a dial tone is sent based on the assigned particulars (S468), and the telephone call request from the public network 30 reaches the terminal 14 of the receiver to open the call (S470).

If the receiver is not connected with the IP address or cannot answer the call during his absence, it is preferred that a voice messaging system be provided to leave a message (S462).

In the meantime, if the receiver has registered his public network number at the database upon subscribing the service according to the present invention, the call can be opened to the public network number registered at the database even in the case where the receiver cannot answer the call with the terminal.

Therefore, it is possible to use the @number provided in accordance with the present invention as a true individual lifelong communication number.

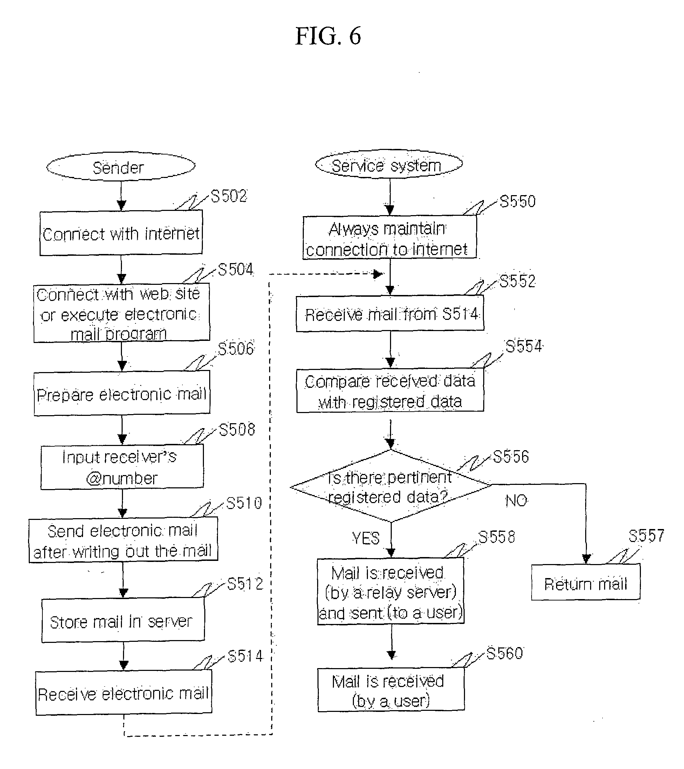

Next, a method for sending and receiving an electronic mail by using the @number will be explained with reference to Figures 1 and 6.

In order to send an electronic mail through the connection with the internet, the sender connects with a web site or executes an electronic mail program (S502, S504). Then, the sender goes through the procedures for sending the electronic mail, such as the input of the title, and the shift of homepage in the electronic mail program, and inputs the data on the receiver of the electronic mail (S506, S508).

Here, the receiver of the electronic mail has been assigned an account using the @number provided upon subscribing the service. For example, if the domain name of the service system according to the present invention is "atphone.com" and the phone number assigned to the user is "12345678," the electronic mail account of the user is "12345678@atphone.com." That is, once the assigned phone number is known, the electronic mail address can be easily conceived and the electronic mail can be sent and received with the same account as the @number. Of course, if the user has registered other electronic mail accounts upon subscribing the service, the user may use a plurality of electronic mail accounts.

The sender will prepare the electronic mail and then send it. The prepared electronic mail is sent through the internet to a mail server with which the receiver is affiliated (S510, S512, S514).

Since the service system 20 should be always able to receive the electronic mail, its connection with the internet is always maintained (S550). The service system 20 checks the received electronic mail whether its mail account is correct or not (S552, S554). That is, the account of the received mail is compared with the registered @number (mail account) to confirm as to whether they conform to each other. If the account of the received mail is the registered account, the electronic mail is received and stored (S556, S558). However, if the account of the received mail is not the registered account, the electronic mail is returned (S557). The electronic mail received by the service system 20 is finally received by the user when the user connects with the gateway 28 (S558, S560).

The computer network based communication system and method according to the present invention as described above have advantages as follows:
First, according to the present invention, by using the @number, that is a unique individual lifelong communication number, assigned to not lines or communication appliances but an individual, the voice/data composite communication can be made through the paths, such as terminal to terminal, terminal to telephone, telephone to telephone and telephone to terminal, regardless of time and location.
Second, since the communication between subscribers to which the @numbers are assigned as well as between the subscriber and a subscriber to the public network can be made by using the @number of one identification number for communication, regardless of the types of communication means such as a telephone, a terminal, an electronic mail, etc., a true communication service between individuals can be obtained. That is, all communication means and internet services for an individual can be integrated.
Third, according to the present invention, communication can be made among all kinds of appliances, such as a refrigerator, digital household electric appliances including a game device, a computer, a PDA, and an internet phone, to which an IP address can be assigned. Further, communication can be made among subscribers to different internet portal sites.

## Claims

1. A communication system, comprising:
a web server for managing communication information including a network identification number and a user identification number assigned to a user and registered;
a gateway for setting communication channels between a public network connected with telephones and an internet network connected with terminals; and
a gatekeeper for authenticating a communication service required by said terminals and dynamically matching said user identification number for communication with an IP address,
whereby voice/data communication can be made between said telephones and said terminals.

2. The communication system as claimed in Claim 1, wherein said user identification number is a unique identification number that corresponds to said user one by one and does not overlap with each other.

3. The communication system as claimed in Claim 2, wherein some prefix figures of said user identification number are reserved and are not assigned to said user.

4. The communication system as claimed in Claim 3, wherein a call is opened via said internet network if a receiver number transmitted upon request of said call corresponds to said user identification number previously registered, and a call is opened via said public network if said receiver number is not said user identification number previously registered.

5. The communication system as claimed in Claim 1, wherein a predetermined international telephone calling identity is further included in said receiver number transmitted upon request of said call.

6. The communication system as claimed in Claim 2, wherein a predetermined international telephone calling identity is further included in said receiver number transmitted upon request of said call.

7. The communication system as claimed in Claim 3, wherein a predetermined international telephone calling identity is further included in said receiver number transmitted upon request of said call.

8. The communication system as claimed in Claim 5, wherein said call is opened via an international telephone network if said international telephone calling identity is included in said transmitted number.

9. The communication system as claimed in Claim 6, wherein said call is opened via an international telephone network if said international telephone calling identity is included in said transmitted number.

10. The communication system as claimed in Claim 7, wherein said call is opened via an international telephone network if said international telephone calling identity is included in said transmitted number.

11. A communication method, comprising the steps of:
registering a user identification number which is assigned to a user without overlapping with each other;
authenticating whether said user is a registered user based on the user identification number, when a communication service is requested; and
automatically opening a call between various communication networks which are different from one another, depending upon said user identification number.

12. The communication method as claimed in Claim 11, wherein said authentication step comprises a step of dynamically matching said user identification number with an IP address.

13. The communication method as claimed in Claim 11, wherein said call is opened via an internet network if a receiver number transmitted upon request of said call corresponds to said user identification number previously registered, and said call is opened via a public network if said identification number is not a registered number.

14. The communication method as claimed in Claim 13, wherein said call is opened via an international telephone network if said call is requested under a condition that an international telephone calling identity is included.
